# EUROPÄISCHE PATENTANMELDUNG

(11) **EP 1 108 487 A2**
(43) Veröffentlichungstag der Anmeldung: **20.06.2001**
(21) Anmeldenummer: 00126749.1
(22) Anmeldetag: 06.12.2000
(51) Int. Cl.: B22F 1/00, C04B 35/632

(54) **Schmiermittel enthaltende Formmasse zur Herstellung pulvermetallischer oder keramischer Erzeugnisse**

(30) Priorität: 17.12.1999 DE 19960991
(71) Anmelder: Clariant GmbH, 65929 Frankfurt am Main (DE)
(72) Erfinder: Bayer, Michael Dl., 86672 Thierhaupten (DE)

(57) **Zusammenfassung**

Die vorliegende Erfindung betrifft eine Formmasse auf Basis sinterfähiger Werkstoffe, bestehend aus
a) 80 bis 99,5 Gew.-% Sinterpulver mit einer maximalen Partikelgröße von 2000 µm
b) 0,5 bis 20 Gew.-% Metallocen-Polyolefinwachs,
c) gegebenenfalls bis zu 19,5 Gew.-% eines weiteren Trockenschmiermittels,
sowie ihre Verwendung zur Herstellung von keramischen und pulvermetallurgischen Formteilen durch Preßformgebung.

## Beschreibung

Die Erfindung bezieht sich auf eine pulvermetallische oder keramische Formmasse , die durch Trockenpressen geformt wird, und die unter Verwendung eines Schmiermittels auf Basis von Metallocen- Polyolefinwachses hergestellt und verarbeitet worden ist.

Ausgangsstoff für pulvermetallurgische oder keramische Erzeugnisse ist ein Metalloder Keramikpulver , das frei fließend ist und das mit einem pulverisierten Schmiermittel vermischt wird. Diese schmiermittelhaltige Mischung wird in eine Preßform gefüllt und axial oder isostatisch zu einem Formling verpreßt. Nachdem der Formling durch einen thermischen Prozess, das Entbindern, vom Schmiermittel befreit wurde, erfolgt die Sinterung des Pulverformlings zum Sinterbauteil.

Mit Hilfe von Fettsäuren oder Metallsalzen dieser Fettsäuren, etwa Zink- oder Lithiumstearate gemäß WO-A-98/05453, lassen sich Pulverformmassen herstellen und pulvermetallurgisch verarbeiten. Besonders die Schmierwirkung dieser genannten Produkte ist sehr gut. Nachteilig ist jedoch das Pyrolyseverhalten dieser Stoffe. Bei thermischer Zersetzung verbleiben metallische oder oxidische Reste im Ofen oder in/auf dem Sinterbauteil. Dies zieht einen erhöhten Reinigungsaufwand nach sich oder beeinträchtigt die Qualität des gesinterten Produktes.

Rückstandsfrei und mit befriedigender Schmierwirkung lassen sich sogenannte Amidwachse einsetzen. Die Rieselfähigkeit der Pulver-Schmiermittel-Mischung wird bei Verwendung von Amidwachsen jedoch beeinträchtigt. Ihre Verwendbarkeit ist dabei auf den kalten Einsatz, d.h. bei Temperaturen von unter 100°C beschränkt.

In WO-A-99/28067 wird die Verwendung von Polyester als Schmiermittel vorgeschlagen. Die Einsetzbarkeit dieser Trockenschmiermittel ist jedoch nur oberhalb von 100°C geeignet und muß mit Schmiermitteln wie Zn-Stearat oder Amidwachs verbessert werden.

In WO-A-99/11406 wird die Verwendung von Olefin-Polymeren mit einem Mw von 500-10000 beschrieben.

Es hat sich jedoch gezeigt, daß die genannten Schmiermittel insbesondere wegen ihres Viskositätsverhaltens Nachteile insbesondere in der Warmpreßtechnik haben. Dies führt zu Verschlechterungen in der Fließfähigkeit der Pulver-Schmiermittel-Mischung bei Temperaturen oberhalb 100°C. Dies bringt beim Füllen der Formen eine Beeinträchtigung der Schüttdichte und damit verbunden eine Verschlechterung des anschließenden Verdichtungsprozesses mit sich.

Überraschenderweise wurde gefunden, dass sich mit Metallocen-Katalysatoren hergestellte Polyolefinwachse (_{"}Metallocen-Polyolefinwachse") besonders gut als Trockenschmiermittel in pulvermetallurgischen und keramischen Formmassen eignen. Es wurde außerdem gefunden daß sich mit Metallocen-Katalysatoren hergestellte Polyolefinwachse mit einem Schmelzpunkt von 80-120°C besonders für die sogenannte Kaltpreßtechnik eignen, während mit Metallocen-Katalysatoren hergestellte Polyolefinwachse mit einem Schmelzpunkt von 100-165 °C in besonderem Maße für die sogenannte Warmpreßtechnik geeignet sind.

Die vorliegende Erfindung betrifft somit eine Formmasse auf Basis sinterfähiger Werkstoffe, bestehend aus
a) 80 bis 99,5 Gew.-% Sinterpulver mit einer maximalen Partikelgröße von 2000 µm
b) 0,5 bis 20 Gew.-% Metallocen-Polyolefinwachs,
c) gegebenenfalls bis zu 19,5 Gew.-% eines weiteren Trockenschmiermittels.

Die erfindungsgemäße Formmasse enthält sinterfähige Stoffe in Form von nichtmetallisch-anorganischen oder metallischen Pulvern. Dazu gehören Pulver auf Basis von Porzellan, Zirkonsilikat, Metalloxiden, Metallnitriden und Metallcarbiden.

Erfindungsgemäße metallische Pulver sind auf Basis von Verbindungen von Eisen, Wolfram, Kupfer, Bronze, Molybdän, Chrom oder Nickel zusammengesetzt. Die maximale Partikelgröße der Pulver liegt vorzugsweise bei 1000 um. Vorzugsweise enthält die Formmasse 85 - 99 Gew.-% der sinterfähigen Stoffe.

Weiter enthält die erfindungsgemäße Formmasse ein Metallocen-Polyolefinwachs als Trockenschmiermittel. Dieses Metallocen-Polyolefinwachs hat vorzugsweise folgende Eigenschaften:

| | |
|---|---|
| Tropfpunkt (Tp) | 80 - 165°C |
| Säurezahl (SZ) | 0 - 50 mg KOH/g |
| Dichte | 0,87 - 1,03 g/cm3 |
| Viskosität der Schmelze bei 170°C | 10 - 100000 mPas. |

Vorzugsweise enthält die Formmasse 1 - 15 Gew.-% Metallocen-Wachse.

Als Polyolefinwachse kommen Homopolymerisate des Ethylens oder Propylens oder Copolymerisate des Ethylens oder Propylens untereinander, oder mit einem oder mehreren 1-Olefinen in Frage. Als 1-Olefine werden lineare oder verzweigte Olefine mit 4-18 C-Atomen, vorzugsweise 4-6 C-Atomen, eingesetzt. Diese Olefine können eine mit der olefinischen Doppelbindung in Konjugation stehende aromatische Substitution aufweisen. Beispiele hierfür sind 1-Buten, 1-Hexen, 1-Octen oder 1-Octadecen, sowie Styrol. Bevorzugt sind Copolymere des Ethylens mit Propen oder 1-Buten. Die Copolymere bestehen zu 70-99,9, bevorzugt zu 80-99 Gew.-% aus Ethylen.

Besonders gut geeignet sind Polyolefinwachse mit einem Tropfpunkt zwischen 90 und 160°C, bevorzugt zwischen 100 und 155°C, einer Schmelzviskosität bei 140°C zwischen 10 und 10000 mPa·s, bevorzugt zwischen 50 und 5000 mPa·s und einer Dichte bei 20°C zwischen 0,89 und 0,96 g/cm³, bevorzugt zwischen 0,91 und 0,94 g/cm³.

Metallocenkalysatoren zur Herstellung der Polyolefinwachse sind chirale oder nichtchirale Übergangsmetallverbindungen der Formel M¹Lₓ, Die Übergangsmetallverbindung M¹Lₓ enthält mindestens ein Metallzentralatom M¹, an das mindestens ein π-Ligand, z.B. ein Cyclopentadienylligand gebunden ist. Darüber hinaus können Substituenten, wie z.B. Halogen-, Alkyl-, Alkoxy- oder Arylgruppen an das Metallzentralatom M¹ gebunden sein. M¹ ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfaßt auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z.B. beschrieben in EP-A-0 632 063. Beispiele für allgemeine Strukturformeln von Metallocenen sowie für deren Aktivierung mit einem Cokatalysator sind u.a. in EP-A-0 571 882 gegeben. Geeignet sind weiterhin durch Oxidation modifizierte Metallocenwachse, wie sie beispielsweise durch Behandlung der Wachsschmelze mit Luft gemäß EP-A-0 896 591 erhalten werden können.Die Offenbarungen dieser Gegenstände in den drei Dokumente wird hiermit einbezogen.

Die erfindungsgemäße Formmasse kann ein weiteres Trockenschmiermittel enthalten. Dabei handelt es sich vorzugsweise um Metallsalze von Fettsäuren oder Amidwachse wie Lithium-, Calzium- oder Zink-Stearat oder Amidwachse des Typs Ethylen-bis-stearoylamid oder Stearoylamid.

Die Herstellung und Verarbeitung der erfindungsgemäßen Formmasse findet im allgemeinen in der folgenden Weise statt:
1. Mischen: Die Sinterpulver werden zusammen mit dem durch Mahlung oder Schmelzeversprühung pulverisierten Polyolefinwachs in einem Mischer bei Temperaturen zwischen 10 und 150°C gemischt, bis eine homogene, rieselfähige Formmasse vorliegt.
2. Verpressen: Die aus 1. erhaltene zwischen 20 und 160°C warme Formmasse wird in zwischen 20 und 160°C temperierte Formen gefüllt und bei Drucken bis zu 700 MPa zu einem Formteil geformt.
3. Entbindern: Das aus 2. erhaltene Formteil wird bis zu einer Temperatur von 600°C in geeigneter Gasatmosphäre langsam erwärmt, um das Metallocen-Polyolefinwachs durch Pyrolyse zu entfernen.
4. Sintern: Das entbinderte Formteil wird, vorzugsweise im gleichen Ofen, bei der materialspezifischen Sintertemperatur gesintert.

Ein weiterer Gegenstand der Erfindung ist die Verwendung der erfindungsgemäßen Formmasse zur Herstellung von keramischen und pulvermetallurgischen Formteilen durch Preßformgebung.

Die nachstehenden Beispiele sollen die Erfindung erläutern:

### Beispiel 1

0,8 Gew.-Teile eines Metallocen-Ethylen-Propylen-Copolymerwachses (Tp: 110°C, SZ: 20 mg KOH/g, Viskosität: 2000 mPa·s bei 170°C) wurden auf eine Korngröße von < 60 µm bei einem mittleren Korndurchmesser von 20 um zerkleinert und mit 99,2 Gew.-Teilen Eisenpulver ASC 100.29 (Hersteller: Höganäs AB) bei Raumtemperatur 15 Minuten gemischt. Die erhaltene Mischung hatte eine Rieselgeschwindigkeit von 30 s/50 g (gemessen auf Flowmeter nach Stahl-Eisenprüfblatt) und eine Schüttdichte von 2,95 g/cm³. Bei 600 MPa Preßdruck wurden Zylinder der Abmessung 11,2 x 20 mm kalt gepreßt. Die Preßdichte betrug 7,20 g/cm³. Die Zylinder wurden nach Entbinderung in strömenden Wasserstoff bei 1120°C in Wasserstoff 30 Minuten auf 7,45 g/cm³ Dichte gesintert.

### Beispiel 2

1 Gew.-Teil eines Metallocen-Polypropylenwachses (Tp: 160°C; SZ: 0 mg KOH/g, Viskosität 3500 mPa·s bei 170°C) wurden auf eine Korngröße von <60 um bei einem mittleren Korndurchmesser von 20 um zerkleinert und mit 99 Gew.-Teilen Eisenpulver ASC 100.29 (Hersteller: Höganäs AB) bei 130°C 15 Minuten gemischt. Die erhaltene Mischung wurde in eine 150°C temperierte Form gegeben und mit einem Preßdruck von 600 MPa heiß verpreßt. Die Preßdichte der hergestellten Zylinder mit den Abmessungen 11,2 x 20 mm betrug 7,30 g/cm³. Die Zylinder wurden in strömenden Wasserstoff bis 600°C entbindert und anschließend bei 1120°C in Wasserstoff 30 Minuten auf eine Dichte von 7,50 g/cm³ gesintert.

### Beispiel 3

5 Gew.-Teile eines oxidierten Metallocen-Polyethylenwachses(Tp: 110°C; SZ: 15 mg KOH/g, Viskosität 3000 mPa·s bei 170°C) wurden auf eine Korngröße von 150 - 450 um zerkleinert und mit 95 Gew.-Teilen eines keramisch gebundenen Korundpulvers mit einer Korngröße 800 - 1500 um gemischt und bei Raumtemperatur bei 200 MPa zu Zylindern gepreßt. Die Dichte der Zylinder betrug 2,6 g/cm³. Die Grünfestigkeit lag bei 3 N/mm². Die Zylinder wurden in Luft entbindert und anschließend bei 1000°C zu porösen Körpern mit einer Dichte von 3,1 g/cm³ gebrannt.

## Patentansprüche

1. Formmasse auf Basis sinterfähiger Werkstoffe, bestehend aus
a) 80 bis 99,5 Gew.-% Sinterpulver mit einer maximalen Partikelgröße von 2000 µm
b) 0,5 bis 20 Gew.-% Metallocen-Polyolefinwachs,
c) gegebenenfalls bis zu 19,5 Gew.-% eines weiteren Trockenschmiermittels.

2. Formmasse gemäß Anspruch 1, enthaltend 85 bis 99 Gew.-% des Bestandteils a).

3. Formmasse gemäß Anspruch 1 und/oder 2, enthaltend 1 bis 15 Gew.-% des Bestandteils b).

4. Formmasse gemäß einem oder mehreren der Ansprüche 1 bis 3, enthaltend ein Metallsalz einer Fettsäure oder ein Amidwachs als Bestandteil c).

5. Verwendung der Formmasse nach einem oder mehreren der Ansprüche 1 bis 4 zur Herstellung von keramischen und pulvermetallurgischen Formteilen durch Preßformgebung.
